(19)

Europäisches
Patentamt
European
Patent Office
Office européen
des brevets

(11) **EP 4 047 341 A1**

(12) **EUROPEAN PATENT APPLICATION**

(43) Date of publication:
**24.08.2022 Bulletin 2022/34**

(21) Application number: **21158150.9**

(22) Date of filing: **19.02.2021**

(51) International Patent Classification (IPC):
***G01M 3/24*** *(2006.01)*

(52) Cooperative Patent Classification (CPC):
**G01M 3/24**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Universiteit Antwerpen**
  **2000 Antwerpen (BE)**

• **Lambrechts Konstruktie**
  **2870 Puurs-Sint-Amands (BE)**

(72) Inventors:
• **Steckel, Jan**
  **9150 Rupelmonde (BE)**
• **Goossens, Jan**
  **9771 Nokere (BE)**

(74) Representative: **IP HILLS NV**
  **Hubert Frère-Orbanlaan 329**
  **9000 Gent (BE)**

(54) **DETECTION OF GAS LEAKS FROM PRESSURIZED CONTAINERS**

(57)  The present disclosure relates to an acoustic system for detecting gas leaks from pressurized containers moving in a pre-determined way in an environment, the acoustic system comprising at least three receivers configured to receive a respective sound signal from the environment and a processing system configured to perform: obtaining, from the at least three receivers, respective received sound signals at respective time instances; the respective received sound signals comprising sound signals emitted by one or more gas-leaking pressurized containers; calculating, from the respective received sound signals and the spatial diversity of the at least three receivers, acoustic images at the respective time instances; the acoustic images respectively comprising emitted acoustic energy as a function of a received direction; and identifying therefrom the one or more gas-leaking pressurized containers by taking into account their movement in the environment.

FIG.1A

## Description

### Technical Field

The present disclosure relates to the detection of gas leaks from pressurized containers and more specifically to an acoustic system for detecting gas leaks from pressurized containers.

### Background

Detection of gas leaks from pressurized containers is of great importance to various fields of applications. In the liquid food and health-care market, many liquids are put into containers such as barrels, bottles, or cans, which are subsequently pressurized with CO2 to achieve carbonation of the liquid. To ensure decent carbonation, an airtight seal between the container and the container lid needs to be ensured which is typically done by using a rubber gasket. However, contamination on the gasket or time-related wear can drastically decrease the sealing properties of the gasket. This has the immediate effect that the carbonation level of the liquid is not achieved which significantly impacts the quality of the product.

Some conventional gas leak detection solutions require sealing the container lid with an airtight cavity and measuring the pressure build-up in that airtight cavity. Such solutions, however, require physical contact with the pressurized containers which may not be possible in many applications.

Other conventional solutions detect gas leaks from pressurized containers by sensing the ultrasonic or acoustic emissions caused by the turbulence of the escaping gas exiting the pressurized environment. However, such solutions are also impractical especially in the extremely noisy industrial environments where these containers are typically filled.

### Summary

An object of embodiments of the present disclosure is to provide a gas leak detection solution overcoming the above limitations.

The scope of protection sought for various embodiments of the invention is set out by the independent claims. The embodiments and features described in this specification that do not fall within the scope of the independent claims, if any, are to be interpreted as examples useful for understanding various embodiments of the invention.

This object is achieved, according to a first example aspect of the present disclosure, by an acoustic system for detecting gas leaks from pressurized containers moving in a pre-determined way in an environment, the acoustic system comprising at least three receivers configured to receive a respective sound signal from the environment and a processing system configured to perform:

- obtaining, from the at least three receivers, respective received sound signals at respective time instances; the respective received sound signals comprising sound signals emitted by one or more gas-leaking pressurized containers;

- calculating, from the respective received sound signals and the spatial diversity of the at least three receivers, acoustic images at the respective time instances; the acoustic images respectively comprising emitted acoustic energy as a function of a received direction; and

- identifying therefrom the one or more gas-leaking pressurized containers by taking into account their movement in the environment.

In other words, the processing system obtains sound signals received from the respective receivers at respective time instances. The received sound signals represent an observation of the acoustic energy emitted from various acoustic sources present in the environment over the observed period. Thus, in presence of one or more gas leaking pressurized containers, the received sound signals will contain the acoustic energy caused by the gas leak from the pressurized containers. However, the observed acoustic energy will also contain acoustic energy from other acoustic sources in the environment. In the manufacturing or production facilities, these other acoustic sources include various industrial machinery, manufacturing equipment, and/or processes. Such acoustic sources may emit sound signals with a frequency similar to the frequency of the sound signals caused by gas leaks from pressurized containers. As a result, the respective acoustic images derived from the received sound signals will contain a complex mixture of the acoustic energy contributed by the gas leaking pressurized containers and the acoustic energy contributed by the industrial machinery, manufacturing equipment, and/or processes. Thus, the resulting acoustic images will contain faulty detections as a result of the presence of these other acoustic sources in the environment.

To discard these faulty detections, the acoustic system exploits the movement of the pressurized containers which is known to the system. For this purpose, the acoustic system and, therefore, its processing system exploits this knowledge by taking into account the pre-determined movement of the pressurized containers to identify the acoustic sources originating from the gas leaks from pressurized containers and thus to discard the faulty detections. Moreover, taking into account the movement of the pressurized containers allows discriminating between acoustic energy originating from stationary, randomly appearing acoustic sources, and acoustic sources moving differently in the environment from the pressurized containers. This further allows discriminating between acoustic sources moving in a predetermined way and a random way in the environment.

Further, the acoustic system employs passive receivers, i.e. receivers capable of recoding acoustic or sound signals but not emitting. Thereby, a cheap and compact acoustic system capable of detecting gas leaks in extremely noisy environments is provided. Furthermore, increasing the number of the receivers and modifying the placement of the receivers, i.e. modifying their spatial relationship, enables a design that may be easily modified to detect gas leaks from various types of containers pressurized to various pressure levels, such as bottles, cans, barrels, etc. storing various gases, liquids or beverages such as soda drinks, beer, sparkling and non-sparkling waters, sparkling and non-sparkling wines, chemicals, etc.

According to an example embodiment, the identifying comprises:

- determining directions of acoustic sources at the respective time instances; and
- discarding faulty acoustic sources by taking into account the movement of the one or more pressurized containers.

In other words, to identify whether detected acoustic energy originates from gas leaks from one or more pressurized containers and therefore to discard faulty detections, the directions of the respective acoustic sources in the respective acoustic images are derived. This allows deriving the directions, i.e. locations, of the detected acoustic sources at the respective time instances and thus over the observed period. As a result, information about the movement of the acoustic sources is obtained which in turn enables the acoustic system to discard faulty detections originating from acoustic sources in the environment other than the gas leaks from the pressurized containers.

According to an example embodiment, the determining comprises detecting peaks in the respective acoustic images, thereby obtaining directions of the respective acoustic sources at the respective time instances.

By detecting the peaks in the respective acoustic images, the directions of the various acoustic sources over the observed period relative to the receivers' positions and orientation are thus obtained. The detection of the peaks may be performed by means of various signal processing algorithms such as binary or adaptive thresholding, sparsity-based decomposition, or other suitable for the purpose techniques.

According to an example embodiment, the discarding comprises:

- tracking the directions of the respective acoustic sources at the respective time instances, thereby obtaining a movement representation of the respective acoustic sources in a direction-time space; and

- comparing the obtained movement representation of the respective acoustic sources with a representation of the pre-determined movement of the one or more pressurized containers in the direction-time space.

In other words, tracking the direction of the respective acoustic sources allows obtaining a movement representation, i.e. the movement trajectory of the acoustic sources in the environment. The obtained movement representation of the respective acoustic sources is compared with the movement representation of the pressurized containers.

Tracking the direction of the acoustic sources allows discriminating between acoustic energy originating from stationary, randomly appearing acoustic sources, and acoustic sources moving in a specific way in the environment. This allows to easily discard detections from random acoustic sources such as electrical interferences and air compressor tools. as well as discard detection originating from non-moving machinery and manufacturing equipment. This allows discarding some faulty detections simply based on whether the acoustic energy originates from stationary acoustic sources or randomly appearing acoustic sources. Thus, the processing system needs to compare only the movement of the acoustic sources moving in a specific way in the environment with the movement of the pressurized containers. As a result, the computation complexity of the overall processing for detecting gas leaks is further minimized.

According to an example embodiment, the calculating comprises beamform processing the respective received signals to compensate for delay or phase variations between the respective received sound signals.

Employing beamform processing allows accounting for the spatial diversity of the receivers, i.e. by taking into account the different distances between the receivers and, therefore, between the receivers and the respective acoustic sources. By calculating the acoustic images in this manner, high-resolution direction information of the sensed environment is obtained. This allows determining the direction and therefore the location of the respective acoustic sources in the environment more accurately.

According to an example embodiment, the calculating further comprises pre-processing the respective received sound signals to improve the signal-to-noise ratio of the respective received sound signals.

The pre-processing allows improving the signal-to-noise ratio, SNR, of the respective sound signals. By employing a band-pass and/or a spectral or spatial notch filtering tuned to attenuating one or more specific frequency bands, noises originating from various industrial machinery, manufacturing equipment, and processes are easily attenuated.

According to an example embodiment, the at least three receivers are forming a planar acoustic array, and wherein the at least three receivers are arranged in an irregular manner.

Using a planar acoustic array allows improving the azimuth and elevation sensitivity. This leads to improved spatial resolution and, therefore, interference rejection. On the other hand, distributing the receivers in an irregular way within the array, allows obtaining a high-resolution acoustic image using fewer receivers while avoiding the need to use super resolution beamform processing techniques, such as Multiple Signal Classification and Minimum Variance Distortionless Response.

According to an example embodiment, the pressurized containers are being transported by means of a material handling equipment. Examples of material handling equipment include forklifts, carts, forklifts, carts, pallets, conveyors, conveyance robots, automated guided sorters, and automated guided vehicles, etc.

According to an example embodiment, the processing system is further configured to perform: deriving a representation of the pre-determined movement by tracking one or more test containers configured to emit an acoustic signal and configured to move in substantially the same pre-determined way in the environment.

In other words, a representation of the pre-determined movement may be derived in a calibration procedure where one or more test containers emitting an acoustic or sound signal are transported in the environment in the same or substantially the same way as the pressurized containers. Using such test containers allows the acoustic system to process the sound signals emitted by the test containers in the same way as the sound signals caused by gas leaks from the pressurized containers. Therefore, an accurate representation of the pre-determined movement of the pressurized containers may be easily obtained.

The test containers may be pressurized containers equipped with faulty rubber gaskets, thus ensuring emission of sound signals. Alternatively, the test containers may be any object equipped with an emitter emitting sound signal which may be recorded by the acoustic system. The respective test containers may emit different acoustic signals, e.g. sound signals with different frequencies. For example, the first subset of test containers may be configured to emit sound signals with frequency in the range of 40 to 60 kHz and another subset of test containers may be configured to emit sound signals with frequency in the range of 60 to 80 kHz.

According to further embodiments, the one or more test containers may emit an encoded acoustic signal. By employing one or more test containers emitting encoded acoustic signals, a robust calibration procedure is obtained which allows deriving a representation of the pre-determined movement even in the presence of noise during the calibration procedure. For example, the encoded sound signal may be a chirp sequence or a short, known noise signal. Further, this allows the test containers to be transported at the same time or together with the pressurized containers and, thus, to run the calibration procedure while maintaining normal operation in the manufacturing facilities.

According to an example embodiment, the processing system is further configured to perform: deriving a representation of the pre-determined movement by taking into account the spatial relationship between the planar acoustic array and the material handling equipment.

In other words, a rough representation of the pre-determined movement may be obtained based on the spatial relationship between the acoustic array of the acoustic system and the material handling equipment. The deriving may further take into account the movement of the material handling equipment which allows deriving a more accurate movement representation of the pressurized containers.

For example, when pressurized containers are transported by material handling equipment such as a conveyor, exploiting the spatial relationship between the acoustic array and the conveyor and the motion trajectory of the conveyor, and accurate movement representation of the pressurized containers may be obtained.

According to a second example aspect, a method for detecting gas leaks from pressurized containers is disclosed, the method comprising:

- obtaining, from at least three receivers, respective received sound signals at respective time instances; the respective received sound signals comprising sound signals emitted by one or more gas-leaking pressurized containers moving in a pre-determined way in an environment;

- calculating, from the respective received sound signals and the spatial diversity of the at least three receivers, acoustic images at the respective time instances; the acoustic images respectively comprising emitted acoustic energy as a function of a received direction; and

- identifying therefrom one or more gas-leaking pressurized containers by taking into account their movement in the environment.

According to a third example aspect, a conveyor system for transporting pressurized containers is disclosed comprising an acoustic system for detecting gas leaks from the pressurized containers according to the first example aspect.

According to a fourth example aspect, a computer program product is disclosed comprising computer-executable instructions for causing a computer to perform the method according to the second example aspect.

According to a fifth example aspect, a computer readable storage medium is disclosed comprising computer-executable instructions for performing the method according to the second example aspect when the program is run on a computer.

The various example embodiments of the first and second example aspects may be applied as example embodiments to the third, fourth and fifth example aspects.

## Brief Description of the Drawings

Some example embodiments will now be described with reference to the accompanying drawings.

FIG.1A shows a block scheme of an acoustic system for detecting gas leaks from pressurized containers according to embodiments of the present disclosure;

FIG.1B shows a schematic illustration of a conveyor system employing the acoustic system of FIG.1A according to embodiments of the present disclosure;

FIG.1C shows a schematic illustration of the acoustic array of the system of FIG.1A according to embodiments of the present disclosure;

FIG.2A shows a detailed block scheme of the acoustic system of FIG.1A according to embodiments of the present disclosure;

FIG.2B shows a schematic illustrating the sound signals received by the respective receivers of the acoustic array according to embodiments of the present disclosure;

FIG.3A shows acoustic images at respective time instances with peaks corresponding to sensed acoustic sources according to the present disclosure;

FIG.3B shows the movement of the sensed acoustic sources of FIG.3A according to the present disclosure;

FIG.4 shows an overview of the process steps for the detection of air leaks of the objects according to the present disclosure; and

FIG.5 shows a plot illustrating the speed of a pressurized container with respect to the required measurement time.

## Detailed Description of Embodiment(s)

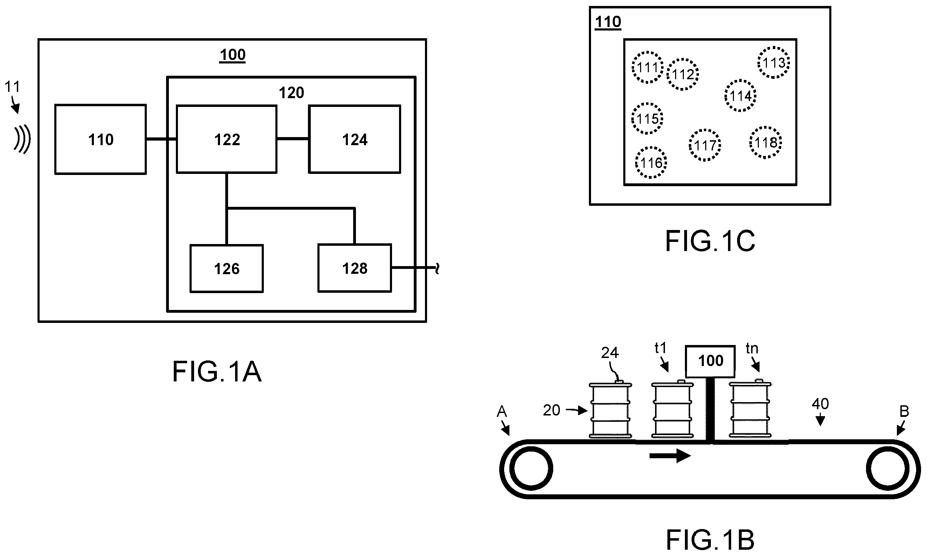

FIG.1A shows an example of an acoustic system 100 for detecting air leaks from pressurized containers moving in a predetermined way in environments such as manufacturing or production facilities where a vast number of other acoustic sources as transport vehicles, electrical machinery, etc. are present in close vicinity to the acoustic system 100. As shown in FIG.1B, the pressurized containers 20 may be transported from point A to point B in the environment by material handling equipment such as forklifts, carts, pallets, conveyors, conveyance robots, automated guided sorters, and automated guided vehicles, etc. The pressurized containers 20 may be thus moving through the environment in various manner and at various speeds which is however known to the acoustic system 100. The acoustic system 100 is thus placed at a location suitable for the detection of gas leaks from pressurized containers 20. As shown in FIG.1B, the acoustic system 100 is fixed to the conveyor 40 at a location such that when the containers are being transported by the conveyor, it is able to sense acoustic signals caused by the turbulence of the gas exiting containers with a faulty rubber gasket on the lid 24 and to detect, therefrom, gas leaks from the pressurized containers 20. The acoustic system 100 is thus able to sense any acoustic signals emitted by the pressurized containers over a period of time, e.g. from start time t1 to end time tn.

The acoustic system 100 comprises an acoustic array 110 and a processing system 120. The acoustic array 110 comprises N ≥ 3 receivers or microphones. In practice, the number of receivers in the acoustic array depends on the specifics of the use case or application scenario. For example, an acoustic array 110 comprising up to 8 receivers may suffice for the detection of gas leaks from pressurized containers such as beer kegs and wine barrels, while 8 to 32 receivers may suffice for the detection of gas leaks from containers such as beer or soda bottles, cans or similar..

The N receivers are arranged in a pseudo-random configuration or irregular fashion within a boundary, e.g. a rectangular, circular or elliptical, as described in detail in the paper by J. Steckel and H. Peremans, "Ultrasound-based air leak detection using a random microphone array and sparse representations," IEEE SENSORS, pp. 1026-1029, 2-5 Nov 2014. FIG.1C shows an example of an acoustic array comprising 8 receivers 111 to 118 placed on an irregular grid and within a rectangular boundary. The receivers receive or sense sound signals emitted by N acoustic sources in the environment at the same time, i.e. $s_n$(t), $n$ = 1... N, where index n indicates the sound signal emitted by acoustic source n. The emitted acoustic signals $s_n$(t) travel through the environment until they reach the M receivers located at positions $p_m = [x_m, y_m, z_m]^T, m$ = 1... M, wherein index m indicates a respective receiver. The M receivers record respective sound signals $s_m[k]$, $m$ = 1...M, from the environment at respective discrete time instances $k$ = 1... K for a period of time, for example, 10 msec. The sound signals $s_m[k]$ as received by the respective receivers are, thus, a mixture of the sound signals emitted by the various acoustic sources in the environment, i.e. $$s_m[k] = \sum_{n=1}^{N} s_n[k - \tau_{m,n}]$$ with $\tau_{m.n} = f(p_m, \psi_n)$ is the delay which depends on the receiver's position, $p_m$, relative to the direction of the acoustic sources $\psi_n$. The sound signals received by the receivers are then fed to the processing system 120 which processes them to determine the presence of gas leaks from pressurized containers.

The processing system 120 may, in general, be formed as a suitable general-purpose computer and comprises a processor 122, a local memory 112, one or more optional input and output interfaces 126, a communication interface 128, and a bus (not shown in the figure). The bus may comprise one or more conductors that permit communication among the various components of the processing system 120. The processor 122 may include any type of conventional processor or microprocessor that interprets and executes programming instructions. The local memory 124 may include a random-access memory, RAM, or another type of dynamic storage device that stores information and instructions for execution by processor 122 and/or read-only memory, ROM, or another type of static storage device that stores static information and instructions for use by processor 122. The input and output interface 126 may comprise one or more conventional mechanisms that permit a user to input information to the processing system 120, such as a keyboard, a mouse, a camera, voice recognition and/or biometric mechanisms, etc., and, one or more conventional mechanisms that output information to the user, such as a speaker, a display, etc. The communication interface 128 may comprise any transceiver-like mechanism such as for example one or more Ethernet interfaces that enables processing system 120 to communicate with other devices and/or systems, for example, smartphones or laptops. The communication interface 128 may be connected to such other devices and/or systems by means of a local area network, LAN, or a wide area network, WAN, such as for example the internet. Additionally, the processing system 120 may comprise a storage interface such as for example a Serial Advanced Technology Attachment, SATA, interface or a Small Computer System Interface, SCSI, for connecting the bus to one or more external storage elements, such as one or more local disks, for example, SATA disk drives, and control the reading and writing of data to and/or from these storage elements. Although the external storage is described as a local disk, in general, any other suitable computer-readable media such as a removable magnetic disk, optical storage media such as solid state drives, flash memory cards, etc. could be used instead.

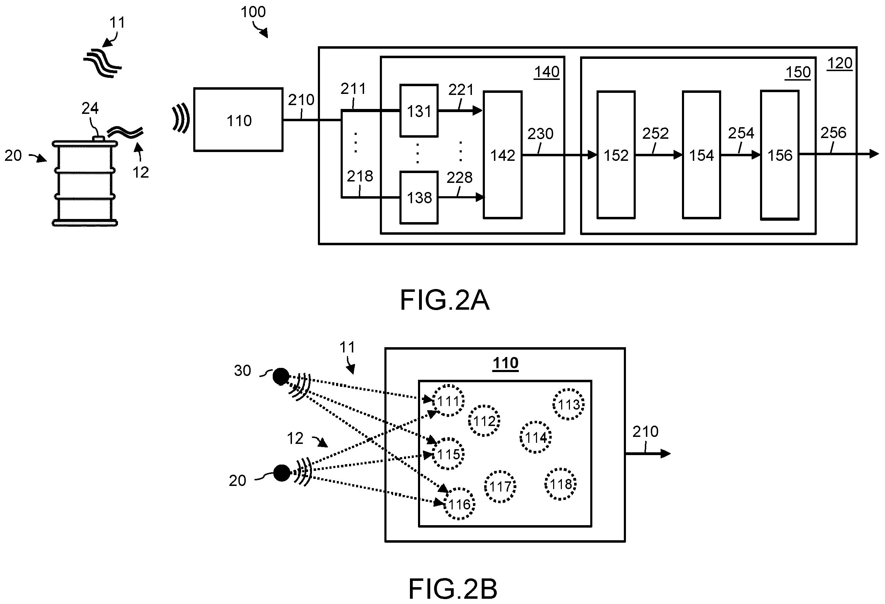

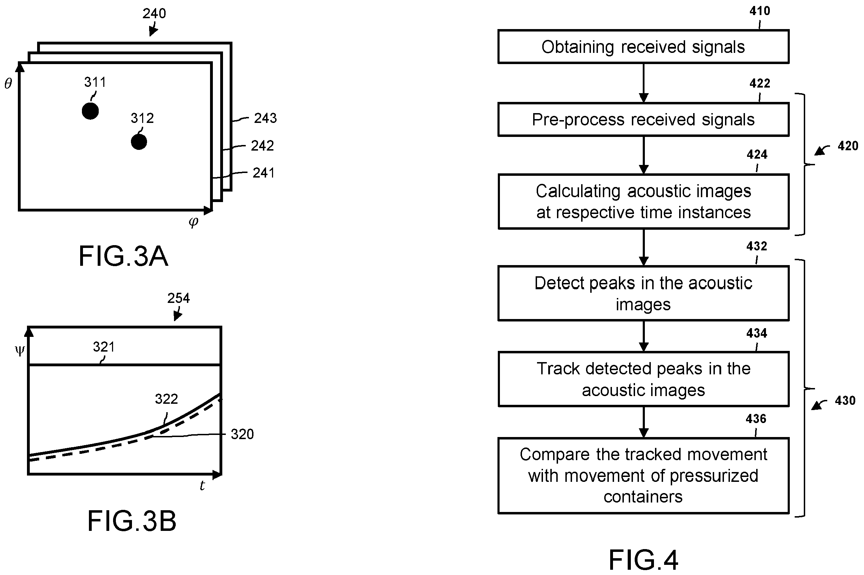

The processing of the received sound signals will be now described in detail with reference to FIG.2A, FIG.2B, and FIG.4. FIG.2A and FIG.2B respectively show a detailed schematic of the processing system 120 and the acoustic array 110 of FIG.1. FIG.4 shows an overview of the process steps performed by the processing system 120 for detecting gas leaks from pressurized containers according to an example embodiment of the present disclosure.

In the first step 410, the processing system 120 obtains the sound signals 210, i.e. $s_m[k]$, $m$ = 1...M recorded by the respective m=8 receivers at the respective k time instances, e.g. $k$ = 1,...,10. As described above, the sound signals $s_m[k]$ as received by the respective receivers are a mixture of sound signals emitted by various acoustic sources in the environment, i.e. $$s_m[k] = \sum_{n=1}^{N} s_n[k - \tau_{m,n}]$$ with $\tau_{m.n} = f(p_m, \psi_n)$ is the delay which depends on the receiver's position, $p_m$, relative to the direction of the acoustic sources $\psi_n$. In the example of FIG.2B, the sound signals received by each of the eight receivers 111 to 118 comprise sound signals 12 emitted by a gas leaking pressurized container 20 and sound signals 11 emitted by another device or equipment 30 located in the vicinity of the acoustic system 100. For illustrative purposes, FIG.2B shows the respective sound signals 11 and 12 received by receivers 111, 115, and 116 only.

In the second step 420, the processing system 120 processes the receiver sound signals $s_m[k]$ to derive acoustic images at the respective time instances, i.e. $k$ = 1,...,10. To do so, the processing system may, first, pre-processes 422 the received sound signals 211-218 to improve their respective signal-to-noise ratio, SNR. The pre-processing may include filtering and/or amplification. The filtering may comprise band-pass filtering and/or spectral or spatial notch filtering. In case the pre-processing comprises filtering only, this step may be expressed mathematically as a convolution of the received sound signals 211-218 with the discrete impulse response of the filter, i.e. $h^F[k]$, as follows:

$$s_m^F[k] = s_m[k] * h^F[k]. \qquad (1)$$

This pre-processing step is optional and thus only necessary if the SNR of the obtained sound signals is not sufficient for the detection of gas leaks. The pre-processing step may be performed by a pre-processing module (not shown in the figure) which may comprise a filtering module and/or an amplification module.

Next, acoustic images at the respective time instances are calculated 422 from the resulting pre-processed sound signals, i.e. $s_m^F[k]$, as follows. First, a conventional Delay-and-Sum beamforming 424 on the receiver array is applied. Beamform processing is required to compensate for the differences in the time needed for a respective emitted sound signal 11 and 12 to reach a respective receiver 111-118. In other words, beamform processing 424 first compensates for delay variations between the received sound signals 211-218 and then summed up the delayed versions of the sound signals to produce an acoustic image. Often, this is referred to as beamforming for the receiver array.

The beamform processing 424 is applied by the beamform processing module 140. The beamform processing module comprises delay modules 131-138 which weights and delays the sound signals 211-218 at the respective time instances with a specific weight and a delay to output a delayed version of the sound signals 221-228, and, the summation module 142 which sums the delayed version of the sound signals to output the resulting acoustic images 230 at the respective time instances. Mathematically, this may be expressed as follows:

$$s_\psi^{BF}[k] = \sum_{m=1}^M \omega_m \cdot s_m^F[k - \tau_m(\psi)] \qquad (2)$$

, where $\omega_m$ is the weight for a respective receiver and $\tau_m(\psi)$ is the direction-dependent delay for a respective receiver, i.e. the time delay $\tau_m(\psi)$ is in a function of the beam direction $\psi = [\theta, \varphi]$, consisting of azimuth $\theta$ and elevation $\varphi$ angles. In other words, each acoustic image is a demi-sphere representation of the acoustic energy emitted by the respective acoustic sources as a function of the received direction $\psi$. The direction-dependent delay may be expressed by the Barlett Beamformer, Multiple Signal Classification, Minimum Variance Distortionless Response, or similar. In short, the resulting $s_\psi^{BF}[k]$ is an acoustic image 230 which is maximally sensitive for a sound signal originating from directions $\psi[\theta, \varphi]^T$ and least sensitive to contributions from signals from all other directions. Thus, so-called spatial filtering is applied which depends n the spatial contribution of the acoustic array 110 and the parameters of the beamform processing, i.e. $\omega_m$ and $\tau_m(\psi)$. The beamforming and the resulting acoustic image $s_\psi^{BF}[k]$ can be construed as a steerable acoustic lens which can be steered by adjusting the respective weights $\omega_m$ and delays $\tau_m(\psi)$. Further, the applied beamform processing implements data-independent beamforming. Such beamform processing offers good stability, however, at the cost of reduced spatial accuracy.

To minimize the computation speed of the beamform processing, the beamform processing may be applied within a region of interest, i.e. within a confined region around the direction $\psi$ where the pressurized containers 20 are expected at the respective time instances. In other words, the knowledge of the movement of the pressurized containers is exploited. Alternatively, a multi-resolution beamform processing may be applied where a high resolution beamform processing is applied within the regions of interests at the respective time instances and a low resolution beamform processing is applied outside the regions of interests.

In the next step 430, the resulting acoustic images 230 are further processed by the detection and tracking module 150 to detect gas leaks from the pressurized containers 20. The detection and tracking module 150 comprises an envelope detection module 152, a tracking module 154 and a comparison module 156. The obtained acoustic images 230 are, first, processed by an envelope detection module 152 to detect 432 peaks of acoustic energy 252 at the various directions $\psi$ in the acoustic images 230 which represent the location of the respective acoustic sources in the environment as a function of time. The movement of the detected peaks is then tracked 434 over time by the tracking module 154 to obtain a movement representation 254 of the acoustic sources in the environment. Finally, the obtained movement representations 254 are compared 436 with a movement representation of the pressurized containers by a comparison module 156. The comparison allows discarding acoustic energy from acoustic sources other than the gas leaking pressurized containers and thus to obtain reliable detection of gas leaks 256 from pressurized containers.

To do so, first, the respective acoustic images 230 are uniformly sampled over a number of directions. The sampling may be performed by, for example, a zonal sphere partitioning algorithm as described in P. Leopardi, "A partition of the unit sphere into regions of equal area and small diameter," Electronic Transactions on Numerical Analysis, vol. 25, pp. 309-327, 2006, which partitions the unit sphere into regions of equal area with a small diameter. The sampling may be performed over 4000 directions which provides a good trade-off between the speed and accuracy of the sampling algorithm.

Alternatively, the respective acoustic images 230 may be decomposed using sparsity-based decomposition which allows exploiting information about the location of the gas leaks in the environment. To do so, each acoustic image is considered as a linear superposition of the acoustic images resulting from every individual gas leak. Mathematically, this can be represented as:

$$E(\psi) = \sum_{l=1}^{L} \omega_l \cdot E_l^{\bar{\alpha}}(\psi) \quad (3)$$

, wherein $\omega_l$ indicates the strength of the individual gas leak $l$ and $E_l^{\bar{\alpha}}(\psi)$ the image if the individual leak $l$ is located at direction $\psi = \bar{\alpha}$. This can be rewritten in matrix notation using a dictionary $D$ and a linear noise model $\eta$:

$$E(\psi) = D \cdot x + \eta \quad (4)$$

Herein, the dictionary D contains all the images from the leaks $l$ at all positions of interest $\bar{\alpha}$, and has a size $[n_{ES} \times n_{pos}]$, where $n_{ES}$ is the dimension of the acoustic image and $n_{pos}$ is the number of positions $\bar{\alpha}$ where gas leaks are expected to occur. The vector x which is also referred to as the solution vector contains the strength for the contributions of the individual leaks and is of dimensions $[n_{pos} \times 1]$. As it is expected there are a few gas leaks in a respective direction, it is expected that this vector is sparse, i.e. the amount of non-zero entries is much smaller than the length of the vector.

This assumption allows applying a $\mathcal{L}_1$ -regularized reconstruction algorithm to estimate the solution vector $x$. The optimization problem to find the solution vector x can be written as:

$$\min_{\arg x}\{\|Dx - E(\psi)\|_2^2 + \lambda \|x\|_1\} \quad (5)$$

, where the parameter $\lambda$ acts as a parameter to control the amount of regularization. A high value of $\lambda$ will favor solutions that a sparser, and a lower value will favor solutions that closely fits the data $E(\psi)$.

Next, the envelope of the resulting acoustic images is estimated by way of full-wave rectification and low-pass filtering:

$$s_\psi^{EN}[k] = \left|s_\psi^{BF}[k]\right| * h^{LP}[k] \quad (6)$$

, where $h^{LP}[k]$ is the discrete impulse response of the low-pass filter. For example, a 2$^{nd}$ order Butterworth filter with a cut-off frequency at 1 kHz may be applied. Using such low-pass filtering for the envelope detection allows removing the noise from the respective acoustic images. Taking the envelope of $s_\psi^{BF}[k]$ results in $s_\psi^{EN}[k]$ which can be interpreted as the acoustic energy profile showing the amount of acoustic energy for a given direction $\psi$. Doing this for every sampling direction $\psi$ creates an energyscape, *ES,* in function of the time for the acoustic system.

A schematic example of the resulting energyscape 240, i.e. $s_\psi^{EN}[k]$, interpolated onto a rectangular azimuth and elevation grid, i.e. $[\theta, \varphi]$-gird, at three time instances 241-243 is shown in FIG.3A. As it can be seen in the figure, the envelope detection allows extracting peaks 311 and 312 of the acoustic energy emitted by two acoustic sources, e.g. acoustic sources 30 and 20. The detected peaks in the respective energyscapes, thus, correspond to the locations of the detected acoustic sources in the $[\theta, \varphi]$-gird at the respective time instances and, therefore, to the direction $\psi$ of the acoustic sources at the respective time instances.

Alternatively, instead of extracting the envelope to detect the direction of the peaks in the resulting acoustic images, other simpler processing algorithms such as binary or adaptive thresholding may be used instead.

For example, applying binary thresholding on the respective acoustic images allows identifying blobs, i.e. areas of connected pixels with an intensity above a certain threshold, in the images. As a result, from each acoustic image, a binary image containing connected pixel areas will be obtained. These binary images may then be used to identify the areas with the highest acoustic energy, e.g. the areas 311 and 312 in FIG.3A, by simply masking the acoustic images with the respective binary images.

As mentioned above, once the peaks in the respective acoustic images are identified, the processing system determines therefrom the respective directions $\psi$ of the acoustic sources and, therefore, their locations in the azimuth and elevation space, i.e. $[\theta, \varphi]$-space, over the observed period.

Once, the directions of the detected acoustic sources over the observed period are determined, the processing proceeds to derive a movement representation for each of the detected acoustic sources. This is done by tracking 434 the directions $\psi$ of the detected acoustic sources 20 and 30 in the energyspace profile 240, i.e. $s_\psi^{EN}[k]$, of the acoustic system. The tracking may be performed by known moving object detection algorithms or Kalman filters.

The result of the tracking is a representation of the movement of the respective acoustic sources in the direction-time space as shown in FIG.3B. In this example, line 321 shows directions 311 over the observed period of the stationary acoustic source 30, and line 322 shows directions 312 over the observed period of the moving acoustic source 20.

In the final step, the derived movement representation is fed to the comparison module 156 which compares 436 the movement representation of the detected acoustic sources with the movement representation of the pressurized containers. The comparison may be performed by means of regression analysis based on a linear or non-linear least-squares approach.

The regression analysis will identify which of the derived movement representations fit most closely the pre-determined movement representation. For the example shown in FIG.3B, the regression analysis will identify which of the derived movement representations 321 and 322 fits most closely to the movement representation of the pressurized containers shown by line 320. Line 322 will be selected as the closest fit as it represents a movement of an acoustic source closely matching the movement of the pressurized containers.

Alternatively, the comparison may be performed by, first, summing the acoustic energy at the directions corresponding to the pre-determined movement representation of the pressurized containers over time, followed by determining whether the resulting acoustic energy is above a pre-determined threshold.

Other suitable for the purpose techniques may be also be used. For example, an extended Kalman filter, EKF, may be used track and determine whether an acoustic source in the environment follows the pre-determined movement.

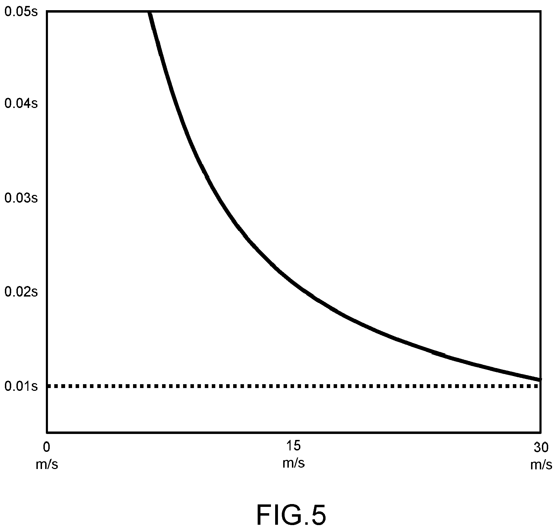

FIG.5 shows a plot illustrating the speed of the pressurized containers with respect to the required measurement time (see the solid line) when using an acoustic array with a 6° opening angle placed 1.5 meters away from the containers and an acquisition interval of 10msec (see the dashed line). Note, that this placement setup represents a worst-case scenario. Placing the acoustic array further away from the pressurized containers will result in an even poorer setup, i.e. will lead to a bigger margin betwepen the solid and the dashed lines while positioning the acoustic array at a location where the containers are moving at a slower speed in the field of view of the sensor array will result in an improved setup. The duration of the acquisition interval depends on the frequency of the sound signals caused by the gas leaks from the pressurized containers. For example, if the sound signals are of 40kHz, an acquisition interval of 10 msec will result in recording 400 periods of the emitted sound signal, which is more than sufficient. If, the sound signals are of higher frequency, and even shorted acquisition interval, for example, an acquisition interval of 1 msec will be more than sufficient.

The processing of the obtained sound signals as described above may further be used to derive the pre-determined movement representation 320 of the pressurized containers 20 in a calibration procedure. For the calibration procedure, one or more test containers are used which are moved in the environment in the same or substantially the same way as the pressurized containers. This requires that the test containers are transported in the same or substantially same way in the environment and by the same material handling equipment as the pressurized containers 20.

The test containers may be any object capable of emitting the same or similar sound signals are the sound signals resulting from the gas leaks, thus emulating gas leaks as close to reality as possible. The test containers may be either gas leaking pressurized containers. Alternatively, the test containers may be objects equipped with an acoustic emitter configured to emit sound signals with the same or similar frequency as the sound signals resulting from the gas leaks. Using such test containers requires that the calibration procedure is run before putting the acoustic system in normal operation.

Alternatively, the test containers may be any object capable of emitting an encoded sound signal. The encoded sound signal may be a chirp sequence or a short, noise signal. In this case, during the calibration procedure, the acoustic system needs to track the encoded sound signal. The processing system 120 of the acoustic system 100 will thus need to first decode the received sound signals and then proceed with the processing as described above with reference to FIG.4.

The emitted sound signals may be encoded differently. This may be beneficial when different test containers emulate gas leaks from different pressurized containers. For example, one test container may be used to emulate gas leaks from small, pressurized containers, such as bottles or cans, while other test containers may be used to emulate gas leaks from larger pressurized containers, such as kegs or barrels. This allows to easily fine-tune the acoustic system to the specific application, i.e. to the detection of gas leaks from specific containers.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. An acoustic system (100) for detecting gas leaks from pressurized containers moving in a pre-determined way in an environment, the acoustic system comprising at least three receivers (111 - 113) configured to receive a respective sound signal from the environment and a processing system (120) configured to perform:

   - obtaining (410), from the at least three receivers (111 - 113), respective received sound signals (11, 12) at respective time instances; the respective received sound signals comprising sound signals emitted by one or more gas-leaking pressurized containers (20);
   - calculating (420), from the respective received sound signals (11, 12) and the spatial diversity of the at least three receivers, acoustic images (230, 240) at the respective time instances; the acoustic images (230, 240) respectively comprising emitted acoustic energy as a function of a received direction; and
   - identifying (430) therefrom the one or more gas-leaking pressurized containers (20) by taking into account their movement in the environment.

2. The acoustic system according to claim 1, wherein the identifying (430) comprises:

   - determining directions of acoustic sources (20, 30) at the respective time instances; and
   - discarding faulty acoustic sources (30) by taking into account the movement of the one or more pressurized containers.

3. The acoustic system according to claim 2, wherein the determining comprises detecting (432) peaks in the respective acoustic images (230, 240), thereby obtaining directions of the respective acoustic sources (20, 30) at the respective time instances.

4. The acoustic system according to claims 2 or 3, wherein the discarding comprises:

   - tracking (434) the directions of the respective acoustic sources at the respective time instances, thereby obtaining a movement representation (321, 322) of the respective acoustic sources (20, 30) in a direction-time space; and
   - comparing (436) the obtained movement representation (321, 322) of the respective acoustic sources with a representation of the pre-determined movement (320) of the one or more pressurized containers in the direction-time space.

5. The acoustic system according to any one of the preceding claims, wherein the calculating (420) comprises beamform processing (424) the respective received signals (11, 12) to compensate for delay or phase variations between the respective received sound signals.

6. The acoustic system according to any one of the preceding claims, wherein the calculating (420) further comprises pre-processing (422) the respective received sound signals (11, 12) to improve the signal-to-noise ratio of the respective received sound signals.

7. The acoustic system according to any one of the preceding claims, wherein the at least three receivers (111 - 113) are forming a planar acoustic array (110) and wherein the at least three receivers are arranged in an irregular manner.

8. The acoustic system according to any one of the preceding claims, wherein the pressurized containers are being transported by means of a material handling equipment (40).

9. The acoustic system according to any one of the preceding claims, wherein the processing system is further configured to perform: deriving a representation of the pre-determined movement by tracking one or more test containers configured to emit an acoustic signal and configured to move in substantially the same pre-determined way in the environment.

10. The acoustic system according to claim 9, wherein the emitted acoustic signal is an encoded acoustic signal.

11. The acoustic system according to claims 7 and 8, wherein the processing system is further configured to perform: deriving a representation of the pre-determined movement by taking into account the spatial relationship between the planar acoustic array (110) and the material handling equipment (40).

12. A method for detecting gas leaks from pressurized containers, the method comprising:

   - obtaining (410), from at least three receivers (111 - 113), respective received sound signals (11, 12) at respective time instances; the respective received sound signals comprising sound signals emitted by one or more gas-leaking pressurized containers (20) moving in a pre-determined way in an environment;
   - calculating (420), from the respective received sound signals (11, 12) and the spatial diversity of the at least three receivers, acoustic images (230, 240) at the respective time instances; the acoustic images (230, 240) respectively comprising emitted acoustic energy as a function of a received direction; and
   - identifying (430) therefrom one or more gas-leaking pressurized containers (20) by taking into account their movement in the environment.

13. A conveyor system for transporting pressurized containers and comprising an acoustic system (100) for detecting gas leaks from the pressurized containers according to any one of claims 1 to 11.

14. A computer program product comprising computer-executable instructions for causing a computer to perform the method according to claim 12.

15. A computer readable storage medium comprising computer-executable instructions for performing the method according to claim 12 when the program is run on a computer.

EP 4 047 341 A1

FIG.1A

FIG.1C

FIG.1B

FIG.2A

FIG.2B

EP 4 047 341 A1

240

$\theta$

311

312

243
242
241

$\varphi$

**FIG.3A**

254

321

322

320

$\psi$

$t$

**FIG.3B**

410
Obtaining received signals

422
Pre-process received signals

424
Calculating acoustic images at respective time instances

420

432
Detect peaks in the acoustic images

434
Track detected peaks in the acoustic images

436
Compare the tracked movement with movement of pressurized containers

430

**FIG.4**

FIG.5

Europäisches
Patentamt

European
Patent Office

Office européen
des brevets

# EUROPEAN SEARCH REPORT

Application Number

EP 21 15 8150

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/261108 A1 (SAKSELA KAI [FI] ET AL) 22 August 2019 (2019-08-22) * abstract * * paragraphs [0041], [0080] * * figures 3, 5 * | 1-15 | INV. G01M3/24 |
| X | US 2016/277863 A1 (CAHILL NIALL [IE] ET AL) 22 September 2016 (2016-09-22) * abstract * * paragraphs [0021], [0040], [0045], [0058] * * figure 1 * | 1-15 | |
| A | WO 94/21996 A1 (LEATHERHEAD FOOD RA [GB]; KIRK JOHN BARRIE [GB]; GOALBY PAUL [GB]) 29 September 1994 (1994-09-29) * abstract * * figure 1 * | 4-6, 8-11,13 | |

TECHNICAL FIELDS
SEARCHED     (IPC)

G01M

The present search report has been drawn up for all claims

| Place of search | Date of completion of the search | Examiner |
|---|---|---|
| The Hague | 3 August 2021 | Grewe, Clemens F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 15 8150

This annex lists the patent family members relating to the patent documents cited in the above-mentioned European search report.
The members are as contained in the European Patent Office EDP file on
The European Patent Office is in no way liable for these particulars which are merely given for the purpose of information.

03-08-2021

| Patent document cited in search report | | Publication date | Patent family member(s) | | Publication date |
|---|---|---|---|---|---|
| US 2019261108 | A1 | 22-08-2019 | CN | 109863375 A | 07-06-2019 |
| | | | EP | 3516350 A1 | 31-07-2019 |
| | | | ES | 2811481 T3 | 12-03-2021 |
| | | | US | 2019261108 A1 | 22-08-2019 |
| | | | WO | 2018055232 A1 | 29-03-2018 |
| US 2016277863 | A1 | 22-09-2016 | CN | 107223332 A | 29-09-2017 |
| | | | TW | 201643688 A | 16-12-2016 |
| | | | US | 2016277863 A1 | 22-09-2016 |
| | | | WO | 2016148825 A1 | 22-09-2016 |
| WO 9421996 | A1 | 29-09-1994 | EP | 0689671 A1 | 03-01-1996 |
| | | | WO | 9421996 A1 | 29-09-1994 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. STECKEL ; H. PEREMANS.** Ultrasound-based air leak detection using a random microphone array and sparse representations. *IEEE SENSORS,* 02 November 2014, 1026-1029

- **P. LEOPARDI.** A partition of the unit sphere into regions of equal area and small diameter. *Electronic Transactions on Numerical Analysis,* 2006, vol. 25, 309-327